# EUROPEAN PATENT APPLICATION

(11) **EP 4 850 941 A1**
(43) Date of publication of application: **09.12.2026**
(21) Application number: 24921530.2
(22) Date of filing: 17.10.2024
(51) Int. Cl.: B60K 1/00, B60K 17/06, B60L 15/20

(54) **ELECTRIC DRIVE ASSEMBLY AND VEHICLE COMPRISING SAME**

(30) Priority: 29.01.2024 CN 202420215788 U
(71) Applicant: BYD Company Limited, Shenzhen, Guangdong 518118 (CN)
(72) Inventor: ZENG, Dong, Shenzhen, Guangdong 518118 (CN); WANG, Zhaohai, Shenzhen, Guangdong 518118 (CN); DING, Huan, Shenzhen, Guangdong 518118 (CN); LIU, Lijun, Shenzhen, Guangdong 518118 (CN); JIA, Yaping, Shenzhen, Guangdong 518118 (CN)
(74) Representative: Mathys & Squire
(86) International application number: PCT/CN2024/125537
(87) International publication number: WO 2025/161506

(57) **Abstract**

An electric drive assembly (10) and a vehicle (100) having the same. The electric drive assembly (10) includes: a drive motor (11), where a central axis of a drive shaft of the drive motor (11) extends in a first direction; a transmission (12), where the transmission (12) is connected to the drive motor (11) and is located on one side of the drive motor (11) in the first direction; a speed reducer (13), where the speed reducer (13) is connected to the transmission (12) and is arranged on a side of the transmission (12) that faces the drive motor (11); and a motor controller (14), where the motor controller (14) and the speed reducer (13) are staggered in the first direction and/or a second direction, and the first direction, the second direction, and a Z direction intersect with each other.

## Description

### CROSS REFERENCE TO RELATED APPLICATIONS

This application is proposed based on Chinese Patent Application No. 2024202157887, filed on January 29, 2024, and claims priority to this Chinese Patent Application, which is incorporated herein by reference in its entirety.

### TECHNICAL FIELD

This application relates to the field of vehicle technologies, and in particular, to an electric drive assembly and a vehicle having the same.

### BACKGROUND

People always seek a more comfortable living environment and a better living space. Although people can survive in a coffin-like confined space, doing so would deprive human civilisation of much of its developmental significance. Having sufficiently comfortable space is something that every individual should be entitled to enjoy. In real life, since the level of scientific and technological development and the level of awareness have not yet reached a sufficiently advanced level, the ongoing development and progress of science, technology, and society is a process of continuously improving, refining, and overcoming the limitations and problems resulting from outdated technologies, concepts and modes of thinking.

In a rear-wheel drive vehicle, an electric drive assembly is usually arranged on a lower side of a vehicle floor. However, size of the electric drive assembly in the Z direction of the vehicle is large, so a rear floor of the vehicle needs to be partially lifted to provide clearance for the electric drive assembly structure. This reduces the Z-direction space of a passenger compartment, thus compromising ride comfort.

### SUMMARY

This application is intended to solve at least one of technical problems in the related technologies. For this purpose, this application proposes an electric drive assembly. The electric drive assembly can reduce Z-direction space occupation, increase passenger compartment space, and allow a user to ride more comfortably.

This application further provides a vehicle having the foregoing electric drive assembly.

An electric drive assembly according to a first aspect of this application includes: a drive motor, wherein a central axis of a drive shaft of the drive motor extends in a first direction; a transmission, wherein the transmission is connected to the drive motor and is located on one side of the drive motor in the first direction; a speed reducer, wherein the speed reducer is connected to the transmission and is arranged on a side of the transmission that faces the drive motor; and a motor controller, wherein the motor controller and the speed reducer are staggered in the first direction and/or a second direction, and the first direction, the second direction, and a Z direction intersect with each other.

According to the electric drive assembly of this application, the drive motor, the transmission, the speed reducer, and the motor controller are provided, and the motor controller and the speed reducer are staggered in the first direction and/or the second direction, such that an entire structure of the drive motor has a higher degree of integration, and the entire structure is more compact and efficient in arrangement and has a smaller Z-direction size. Thus, when the electric drive assembly is arranged in a vehicle, a passenger compartment of the vehicle can have larger Z-direction space, a user can ride more comfortably, and riding experience is better.

In addition, the electric drive assembly according to this application may further include the following additional technical features.

In some embodiments of this application, the motor controller is disposed on a side of the speed reducer that faces the drive motor, and directions of the motor controller and the speed reducer are completely staggered in the first direction.

In an embodiment of this application, in a projection plane perpendicular to the first direction, a projection of the motor controller and a projection of the speed reducer at least partially overlap in the Z direction.

In some examples of this application, the motor controller and the drive motor are arranged in the second direction, and the second direction, the first direction, and the Z direction intersect with each other.

In an example of this application, in a direction from the drive motor towards the motor controller, the motor controller extends downwards and obliquely in the Z direction; and/or in a projection plane perpendicular to the second direction, a projection of the motor controller and a projection of the drive motor partially overlap in the Z direction.

In some specific embodiments of this application, a thickness of the speed reducer in the first direction is less than a length of the speed reducer in the second direction.

In some specific examples of this application, the electric drive assembly further includes a differential lock, wherein the differential lock is disposed on a side of the speed reducer that faces the drive motor, the differential lock is connected to the speed reducer, and the differential lock is located in a space defined by the drive motor, the speed reducer, and the motor controller.

In some embodiments of this application, in the Z direction, a bottom of the drive motor is higher than a bottom of the speed reducer; and/or a bottom of the transmission is higher than the bottom of the speed reducer.

In some embodiments of this application, the electric drive assembly further includes a housing, wherein a mounting cavity is formed in the housing, the speed reducer, the drive motor, and the transmission are all disposed in the mounting cavity, and the motor controller is fastened to the housing.

A vehicle according to a second aspect of this application includes the electric drive assembly according to the first aspect of this application.

According to the vehicle of this application, the electric drive assembly of the first aspect is provided, the electric drive assembly is provided with the drive motor, the transmission, the speed reducer, and the motor controller, and the motor controller and the speed reducer are staggered in the first direction and/or the second direction, such that an entire structure of the drive motor has a higher degree of integration, and the entire structure is more compact and efficient in arrangement and has a smaller Z-direction size. Thus, when the electric drive assembly is arranged in the vehicle, a passenger compartment of the vehicle can have larger Z-direction space, a user can ride more comfortably, and riding experience is better.

Some of additional aspects and advantages of this application are provided in the following descriptions, and some of the additional aspects and advantages become clear from the following descriptions or are learned from practice of this application.

### BRIEF DESCRIPTION OF DRAWINGS

FIG. 1 is a schematic diagram of an electric drive assembly according to an embodiment of this application;
FIG. 2 is a schematic diagram of an electric drive assembly from another perspective according to an embodiment of this application;
FIG. 3 is a schematic diagram of a vehicle according to an embodiment of this application;
FIG. 4 is a schematic diagram of a vehicle from another perspective according to an embodiment of this application;
FIG. 5 is a schematic diagram of a vehicle from still another perspective according to an embodiment of this application;
FIG. 6 is a schematic diagram of a vehicle from yet another perspective according to an embodiment of this application; and
FIG. 7 is a sectional view of a position of an electric drive assembly in a vehicle according to an embodiment of this application.

Reference numerals:
10: electric drive assembly;
11: drive motor; 12: transmission; 13: speed reducer; 14: motor controller; 15: differential lock;
20: frame; 30: subframe; 40: rear floor; and
100: vehicle.

### DESCRIPTION OF EMBODIMENTS

The following describes in detail embodiments of this application, and examples of the embodiments are shown in the accompanying drawings. Same or similar reference numerals throughout the accompanying drawings indicate same or similar elements or elements having the same or similar functions. The embodiments described below with reference to the accompanying drawings are examples and aim to explain this application and cannot be construed as limiting this application.

The disclosure described below provides many different embodiments or examples for implementing different structures of this application. To simplify the disclosure of this application, components and arrangements of specific examples are described below. Certainly, the components and the arrangements are merely examples and are not intended to limit this application. In addition, reference numbers and/or reference letters may be repeated in different examples in this application, and such repetition is for simplification and clarity purposes, and does not indicate a relationship between the various embodiments and/or arrangements discussed. In addition, this application provides examples of various specific processes and materials, but a person of ordinary skill in the art may be aware of application of another process and/or use of another material.

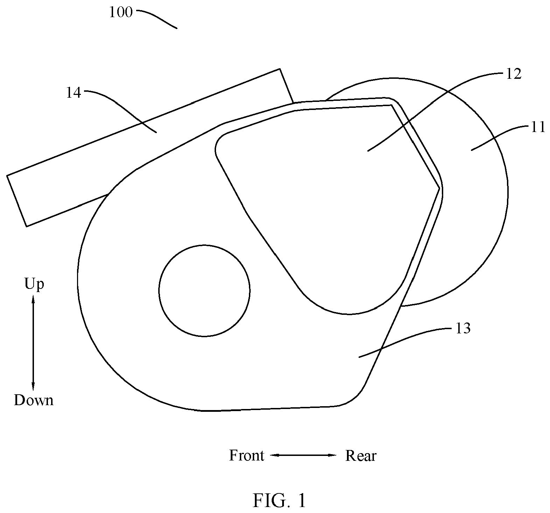

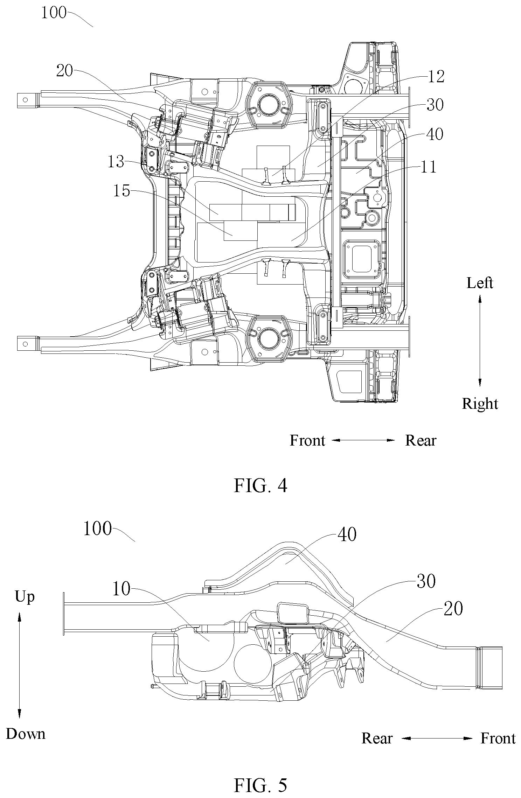

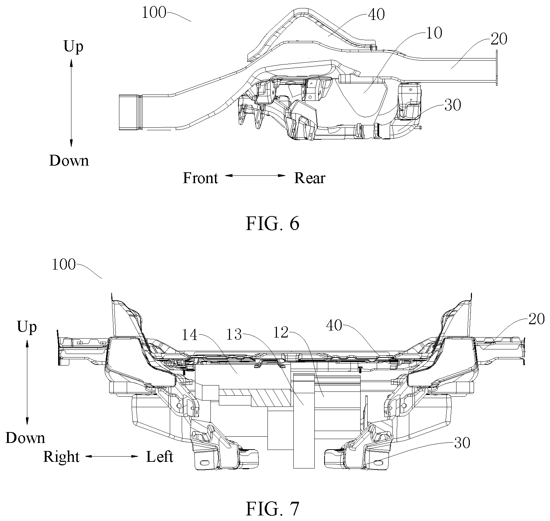

The following describes an electric drive assembly 10 according to an embodiment of a first aspect of this application with reference to FIG. 1 to FIG. 7.

As shown in FIG. 1 to FIG. 7, an electric drive assembly 10 according to an embodiment of the first aspect of this application includes a drive motor 11, a transmission 12, a speed reducer 13, and a motor controller 14.

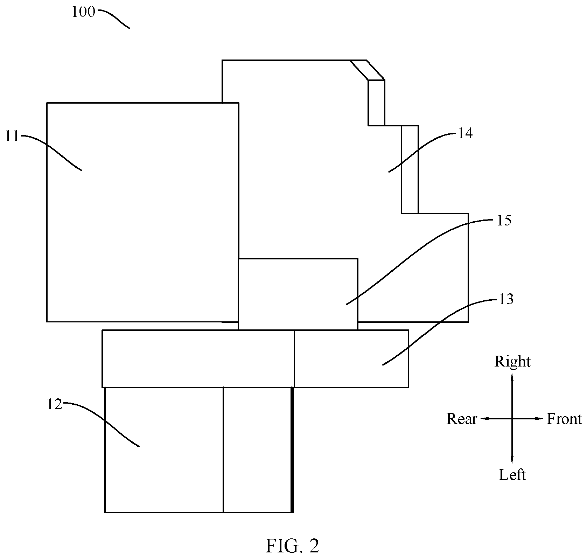

Specifically, a central axis of a drive shaft of the drive motor 11 extends in a first direction (a left-right direction shown in FIG. 2). The transmission 12 is connected to the drive motor 11 and is located on one side of the drive motor 11 in the first direction. The speed reducer 13 is connected to the transmission 12 and is arranged on a side of the transmission 12 that faces the drive motor 11. The motor controller 14 and the speed reducer 13 are staggered in the first direction and/or a second direction, and the first direction, the second direction, and a Z direction intersect with each other.

In the embodiment, the central axis of the drive shaft of the drive motor 11 extends in the first direction. The transmission 12 is connected to the drive motor 11 and is located on one side of the drive motor 11 in the first direction. An output shaft of the drive motor 11 may be in transmission connection to the transmission 12 in the first direction directly. In this way, a quantity of transmission assemblies can be reduced to some extent, and arrangement in a transmission direction can be simplified, such that an entire structure of the electric drive assembly 10 is relatively compact. The first direction in the embodiment may be a direction other than the Z direction (an up-down direction shown in FIG. 1). For example, the first direction may be an X direction or a Y direction. The first direction and the second direction intersect with the Z direction. The first direction may be perpendicular to the Z direction. The first direction may alternatively intersect with the Z direction at an acute angle or an obtuse angle. The second direction may be perpendicular to the Z direction. The first direction may alternatively intersect with the Z direction at an acute angle or an obtuse angle.

As shown in FIG. 1 and FIG. 2, the speed reducer 13 has a large height in the Z direction of a vehicle 100. In the embodiment, the speed reducer 13 is connected to the transmission 12 and is arranged on the side of the transmission 12 that faces the drive motor 11. That is, the speed reducer 13 and the transmission 12 are arranged in the first direction, and the drive motor 11 and the transmission 12 are arranged in the first direction. In this way, when the electric drive assembly 10 is arranged and mounted, the transmission 12 may be partially or entirely located within an arrangement height range of the speed reducer 13, and the drive motor 11 may also be partially located within the arrangement height range of the speed reducer 13, such that additional space occupied by the drive motor 11 and the transmission 12 may be reduced in the Z direction, and an overall Z-direction size of the electric drive assembly 10 may be reduced.

In the embodiment, the transmission 12 is arranged together with the motor controller 14, the speed reducer 13, and the drive motor 11, such that the electric drive assembly 10 has a higher degree of integration. When the electric drive assembly 10 is arranged in the vehicle 100, less space may be occupied, facilitating arrangement of other structures in the vehicle 100, and making assembly of the vehicle 100 easier.

It will be understood that in the related technologies, during arrangement of the electric drive assembly 10, the motor controller 14 is arranged above the speed reducer 13 in the Z direction typically, such that the motor controller 14 can occupy large Z direction space, and then Z direction space occupied by the electric drive assembly 10 can be large. In the embodiment, the motor controller 14 and the speed reducer 13 are staggered in the first direction and/or the second direction. The motor controller 14 and the speed reducer 13 may be staggered in the first direction. The motor controller 14 and the speed reducer 13 may alternatively be staggered in the second direction. The motor controller 14 and the speed reducer 13 may alternatively be staggered in both the first direction and the second direction.

When the electric drive assembly 10 is assembled and arranged, the motor controller 14 may be arranged downwards relative to an upper end surface of the speed reducer 13, such that a height range of arrangement of the motor controller 14 in the Z direction may partially overlap a height range of arrangement of the speed reducer 13 in the Z direction. In this way, when the electric drive assembly 10 is assembled and arranged, space occupied by the motor controller 14 in the Z direction is reduced, and a height of the electric drive assembly 10 in the Z direction is greatly reduced. Further, when the vehicle 100 is manufactured, a passenger compartment may have a large Z-direction space, such that a user can ride more comfortably, and riding experience is better.

According to the electric drive assembly 10 of the embodiment of this application, the drive motor 11, the transmission 12, the speed reducer 13, and the motor controller 14 are provided, and the motor controller 14 and the speed reducer 13 are staggered in the first direction and/or the second direction, such that an entire structure of the drive motor 11 has a higher degree of integration, and the entire structure is more compact and efficient in arrangement and has a smaller Z-direction size. Thus, when the electric drive assembly 10 is arranged in the vehicle 100, the passenger compartment of the vehicle 100 can have larger Z-direction space, a user can ride more comfortably, and riding experience is better.

In some embodiments of this application, as shown in FIG. 1 and FIG. 2, the motor controller 14 may be disposed on a side of the speed reducer 13 that faces the drive motor 11. The motor controller 14 and the speed reducer 13 may be completely staggered in the first direction.

In the embodiment, the motor controller 14 is disposed on the side of the speed reducer 13 that faces the drive motor 11. For example, a surface of a side of the motor controller 14 that faces the speed reducer 13 and a surface of a side of the speed reducer 13 that faces the motor controller 14 are attached to each other or define a gap, such that the motor controller 14 may be arranged in a space area defined by cooperation between the speed reducer 13 and the drive motor 11. The motor controller 14 and the drive motor 11 are arranged on the same side of the speed reducer 13, such that space can be better utilized, and the entire structure of the electric drive assembly 10 can be more compact and efficient in arrangement.

The motor controller 14 and the speed reducer 13 are completely staggered in the first direction. That is, in the first direction, the motor controller 14 and the speed reducer 13 are spaced apart. When the electric drive assembly 10 is assembled and arranged, interference between arrangement positions of the motor controller 14 and the speed reducer 13 in the Z direction may be avoided, such that the motor controller 14 may be arranged more conveniently. An arrangement height of the motor controller 14 in the Z direction can be conveniently reduced in the electric drive assembly 10, such that the Z-direction size of the entire electric drive assembly 10 can be effectively reduced. Further, after the electric drive assembly 10 is arranged in the vehicle 100, a rear floor 40 does not need to be partially lifted to avoid the electric drive assembly 10, such that the passenger compartment can have larger Z-direction space, and a user can ride more comfortably.

In an embodiment of this application, as shown in FIG. 1, in a projection plane perpendicular to the first direction, a projection of the motor controller 14 and a projection of the speed reducer 13 may at least partially overlap in the Z direction.

In the embodiment, the projection of the motor controller 14 in the projection plane is configured to at least partially overlap the projection of the speed reducer 13, such that the motor controller 14 and the speed reducer 13 can partially overlap in an arrangement height range in the Z direction. In this way, an overall height of an electric control area and the speed reducer 13 after assembly can be reduced. The Z-direction size of the entire electric drive assembly 10 can be reduced. The passenger compartment can have larger space. A user can ride more comfortably.

The projection of the motor controller 14 and the projection of the speed reducer 13 at least partially overlap in the Z direction. That is, the projection of the motor controller 14 may completely overlap the projection of the speed reducer 13. The arrangement height range of the motor controller 14 in the Z direction may completely fall within the arrangement height range of the speed reducer 13 in the Z direction. In actual assembly and arrangement, the motor controller 14 and the speed reducer 13 may be efficiently arranged as required, as long as the projections partially overlap to reduce a Z-direction height.

In some examples of this application, as shown in FIG. 1 and FIG. 2, the motor controller 14 and the drive motor 11 may be arranged in the second direction (the second direction shown in FIG. 1). The second direction, the first direction, and the Z direction intersect with each other.

The second direction, the first direction, and the Z direction intersect with each other. The second direction may intersect with the first direction, the second direction may intersect with the Z direction, and the first direction may intersect with the Z direction. Specifically, the second direction may be perpendicular to the first direction or intersect with the first direction at an acute angle/an obtuse angle. The second direction may alternatively be perpendicular to the Z direction or intersect with the Z direction at an acute angle/an obtuse angle. The first direction may alternatively be perpendicular to the Z direction or intersect with the Z direction at an acute angle/an obtuse angle.

In the embodiment, the motor controller 14 and the drive motor 11 are arranged in the second direction, such that interference between the motor controller 14 and the drive motor 11 during arrangement in the Z direction can be reduced to some extent. The motor controller 14 and the drive motor 11 can be arranged more flexibly. The drive motor 11 and the motor controller 14 can well occupy an arrangement range area of the speed reducer 13 in the second direction. The motor controller 14 and the drive motor 11 can make reasonable use of the available space and can be assembled and arranged relatively compactly with the speed reducer 13. Thus, the entire structure of the electric drive assembly 10 can be more compact to some extent. Space occupied by the electric drive assembly 10 can be reduced. Assembly and arrangement of the electric drive assembly 10 and other structural components in the vehicle 100 are facilitated.

Further, the motor controller 14 may be arranged on a front side of the drive motor 11 in the second direction, such that assembly and arrangement requirements of the electric drive assembly 10 can be satisfied. With reference to FIG. 2, in the embodiment, the drive motor 11 needs to be in transmission connection to the transmission 12. The transmission 12 is arranged at a rearward position of the speed reducer 13 in the second direction. The motor controller 14 is arranged in front of the drive motor 11, such that the drive motor 11 can be in transmission connection to the transmission 12 conveniently, and the electric drive assembly 10 can be compact and efficient in arrangement. Certainly, when the transmission 12 is arranged at a forward position of the speed reducer 13, the motor controller 14 may alternatively be arranged behind the drive motor 11 as required.

In an example of this application, as shown in FIG. 1, in a direction from the drive motor 11 towards the motor controller 14, the motor controller 14 may extend downwards and obliquely in the Z direction.

In this way, arrangement of the motor controller 14 and the speed reducer 13 can be more compact. Specifically, arrangement ranges of the motor controller 14 in the second direction and the Z direction have a larger overlapping range with arrangement ranges of the speed reducer 13 in the second direction and the Z direction. Therefore, after the motor controller 14 and the speed reducer 13 are assembled and arranged, the motor controller 14 has fewer portions protruding from the speed reducer 13 in the Z direction and the second direction, the entire structure of the electric drive assembly 10 is more compact in arrangement, and space utilization rate is higher.

In an example of this application, with reference to FIG. 1 and FIG. 2, in a projection plane perpendicular to the second direction, a projection of the motor controller 14 and a projection of the drive motor 11 may partially overlap in the Z direction.

The projection of the motor controller 14 and the projection of the drive motor 11 partially overlap in the Z direction. Thus, when the motor controller 14 and the drive motor 11 are assembled and arranged, the motor controller 14 can be arranged better by using the space area defined by cooperation between the speed reducer 13 and the drive motor 11. The arrangement height of the motor controller 14 in the Z direction can be conveniently reduced. The overall Z-direction size of the motor controller 14 and the drive motor 11 after assembly and arrangement can be reduced to some extent. Further, the Z-direction size of the electric drive assembly 10 can be reduced. After the electric drive assembly 10 is mounted in the vehicle 100, the passenger compartment can have larger Z-direction space, and a user can ride more comfortably.

In an example of this application, with reference to FIG. 1 and FIG. 2, in the direction from the drive motor 11 towards the motor controller 14, the motor controller 14 may extend downwards and obliquely in the Z direction. In a projection plane perpendicular to the second direction, a projection of the motor controller 14 and a projection of the drive motor 11 may partially overlap in the Z direction.

In the embodiment, the motor controller 14 extends downwards and obliquely in the Z direction, and the projection of the motor controller 14 in the projection plane perpendicular to the second direction partially overlaps the projection of the drive motor 11 in the Z direction, such that the motor controller 14, the drive motor 11, and the speed reducer 13 can be more compact in assembly and arrangement. Space utilization can be more efficient. The entire structure of the electric drive assembly 10 can be more compact in arrangement. The electric drive assembly 10 can be arranged in the vehicle 100 more conveniently. The Z-direction size of the electric drive assembly 10 can be smaller. After the electric drive assembly 10 is assembled and arranged in the vehicle 100, the Z-direction space of the passenger compartment of the vehicle 100 can be better increased, and a user can ride more comfortably.

In some specific embodiments of this application, as shown in FIG. 2, a thickness of the speed reducer 13 in the first direction is less than a length of the speed reducer 13 in the second direction.

In the embodiment, the thickness of the speed reducer 13 in the first direction is configured to be less than the length of the speed reducer 13 in the second direction, such that when the electric drive assembly 10 is assembled and arranged, a size of the entire structure of the electric drive assembly 10 in the first direction can be kept within a small size range. After the electric drive assembly 10 is arranged and assembled in the vehicle 100, the size of the entire structure of the electric drive assembly in the first direction can be small, to provide sufficient space for the arrangement of other structures in the vehicle 100. For example, a suspension may have large mounting and arrangement space in the first direction. The vehicle 100 can be assembled and arranged more conveniently. The electric drive assembly 10 in the embodiment may be suitable for vehicles with small tracks.

In some specific examples of this application, as shown in FIG. 2, the electric drive assembly 10 may further include a differential lock 15. The differential lock 15 is disposed on a side of the speed reducer 13 that faces the drive motor 11. The differential lock 15 is connected to the speed reducer 13. The differential lock 15 is located in a space defined by the drive motor 11, the speed reducer 13, and the motor controller 14.

In the embodiment, the differential lock 15 is disposed in the space defined by the drive motor 11, the speed reducer 13, and the motor controller 14, such that space can be reasonably and fully utilized, and the entire structure of the electric drive assembly 10 can be more compact and reasonable in arrangement.

In some embodiments of this application, as shown in FIG. 1, in the Z direction, a bottom of the drive motor 11 may be higher than a bottom of the speed reducer 13.

The bottom of the drive motor 11 is disposed higher than the bottom of the speed reducer 13, such that the electric drive assembly 10 defines a large clearance space at a bottom position of the drive motor 11. A longitudinal beam of a subframe 30 of the vehicle 100 may extend through the clearance space at the bottom of the drive motor 11 and be fastened to the electric drive assembly 10 and a frame 20 in an assembly configuration. Thus, the space in the electric drive assembly 10 can be more fully utilized. Cooperative arrangement of the electric drive assembly 10 with the subframe 30 in the vehicle 100 can be facilitated. Space utilization can be more efficient.

In some embodiments of this application, as shown in FIG. 1, a bottom of the transmission 12 may be higher than the bottom of the speed reducer 13.

In this way, the electric drive assembly 10 may define large clearance space at a bottom position of the transmission 12. The longitudinal beam of the subframe 30 of the vehicle 100 may extend through the clearance space at the bottom of the transmission 12 and be fastened to the electric drive assembly 10 and the frame 20 in an assembly configuration. Thus, the space in the electric drive assembly 10 can be more fully utilized. Cooperative arrangement of the electric drive assembly 10 with the subframe 30 in the vehicle 100 can be facilitated. Space utilization can be more efficient.

In some embodiments of this application, as shown in FIG. 1, in the Z direction, the bottom of the drive motor 11 may be higher than the bottom of the speed reducer 13. The bottom of the transmission 12 may be higher than the bottom of the speed reducer 13.

In the embodiment, the bottom of the drive motor 11 is disposed higher than the bottom of the speed reducer 13, and the bottom of the transmission 12 is arranged higher than the bottom of the speed reducer 13, such that clearance space defined by the electric drive assembly 10 at the bottom position of the drive motor 11 and the transmission 12 can facilitate the longitudinal beams on a left side and a right side of the subframe 30 in extending through the clearance space and being fastened to the electric drive assembly 10 and the frame 20 in an assembly configuration. Larger space may be reserved for the arrangement of a suspension in the first direction. The space in the electric drive assembly 10 can be more fully utilized. To some extent, a ground clearance of the entire vehicle in the Z direction of the subframe 30 can be increased, such that the vehicle 100 has better passing performance. The passenger compartment can have larger Z-direction space. A user can ride more comfortably.

In some embodiments of this application, the electric drive assembly 10 may further include a housing. A mounting cavity is formed in the housing. The speed reducer 13, the drive motor 11, and the transmission 12 are all disposed in the mounting cavity. The motor controller 14 is fastened to the housing.

In the embodiment, the speed reducer 13, the drive motor 11, and the transmission 12 are all disposed in the mounting cavity, such that a quantity of connectors of split connection can be reduced, and occupied space can be reduced. The entire structure of the electric drive assembly 10 can be more compact. The electric drive assembly 10 can have higher integration and satisfy a lightweight requirement. After being assembled and fastened in the vehicle 100, the electric drive assembly 10 can provide more arrangement space for the arrangement of other systems of the vehicle 100, and the vehicle 100 can be arranged more conveniently. Further, the differential lock 15 may alternatively be disposed in the mounting cavity, such that the entire structure of the electric drive assembly 10 can be more compact.

In the embodiment, the motor controller 14 is separately arranged and fastened to the housing, such that the motor controller 14 can operate more stably and safely, to facilitate maintenance and replacement of the motor controller 14.

The following describes a vehicle 100 according to an embodiment of a second aspect of this application with reference to FIG. 1 to FIG. 7.

As shown in FIG. 1 to FIG. 7, the vehicle 100 according to an embodiment of this application includes the electric drive assembly 10 according to the embodiment of the first aspect of this application.

According to the vehicle 100 of the embodiment of this application, the electric drive assembly 10 of the embodiment of the first aspect is provided. The electric drive assembly 10 is provided with a drive motor 11, a transmission 12, a speed reducer 13, and a motor controller 14, the drive motor 11 and the motor controller 14 are disposed on the same side of the speed reducer 13, and the motor controller 14 and the speed reducer 13 are staggered in a first direction and/or a second direction, such that an entire structure of the drive motor 11 has a higher degree of integration, and the entire structure is more compact and efficient in arrangement and has a smaller Z-direction size. Thus, when the electric drive assembly 10 is arranged in the vehicle 100, a passenger compartment of the vehicle 100 can have larger Z-direction space, a user can ride more comfortably, and riding experience is better.

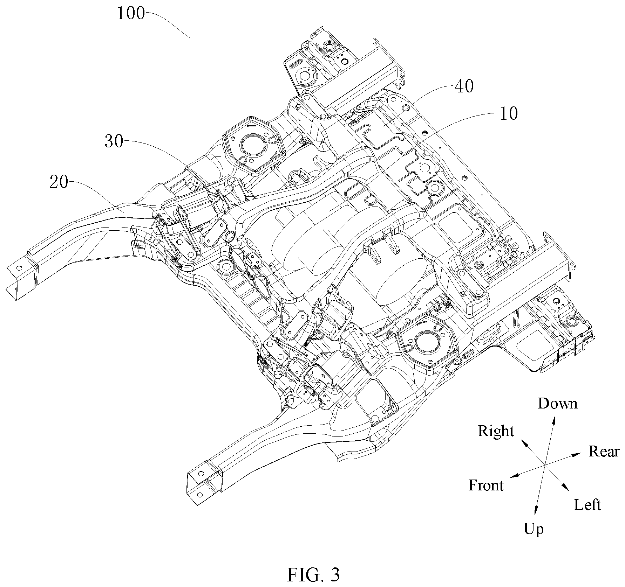

In some embodiments of this application, as shown in FIG. 3 to FIG. 7, the vehicle 100 may further include: a frame 20, a rear floor 40, and a subframe 30. The rear floor 40 is fastened to the frame 20. The electric drive assembly 10 is fastened to the subframe 30 through front and rear mounts. The subframe 30 is fastened to the frame 20 through connection points around. The subframe 30 and the electric drive assembly 10 are located on a lower side of the rear floor 40.

The electric drive assembly 10 is fastened to the subframe 30 through the front and rear mounts, to reduce transmission of vibration generated during operation of the electric drive assembly 10 to the frame 20, and improve comfort of the vehicle 100. The electric drive assembly 10 is fastened to the frame 20 through the subframe 30. A structure is simple, and assembly is convenient.

The following describes a vehicle 100 according to a specific embodiment of this application with reference to FIG. 1 to FIG. 7.

As shown in FIG. 1 to FIG. 7, the vehicle 100 in the embodiment may be an off-road vehicle, a pickup, a large sports utility vehicle (SUV), or another new energy vehicle.

The vehicle 100 includes a frame 20, a rear floor 40, a subframe 30, and an electric drive assembly 10. In the embodiment, the vehicle 100 is a rear-wheel drive vehicle. The electric drive assembly 10 is arranged on a rear portion of the vehicle 100. Specifically, the electric drive assembly 10 is fastened to the subframe 30 through mounts. The subframe 30 is fastened to the frame 20. The rear floor 40 is fastened to the frame 20 and is located on an upper side of the electric drive assembly 10 and the subframe 30.

The electric drive assembly 10 includes a housing, a transmission 12, a speed reducer 13, a differential lock 15, a drive motor 11, and a motor controller 14. A mounting cavity is formed in the housing. The transmission 12, the speed reducer 13, the differential lock 15, and the drive motor 11 are all disposed in the mounting cavity. The motor controller 14 is fastened to the housing through fasteners. The housing and the subframe 30 are fastened through mounts.

The transmission 12 is disposed at an upper position on a left side of the speed reducer 13. The drive motor 11 is disposed at an upper position on a right side of the speed reducer 13. The motor controller 14 is disposed at an upper and forward position on the right side of the speed reducer 13. The drive motor 11 and the motor controller 14 are arranged one behind the other and define a gap. The differential lock 15 is disposed on the right side of the speed reducer 13 and is located in a space defined by the speed reducer 13, the drive motor 11, and the motor controller 14. Specifically, the speed reducer 13 is offset leftwards relative to a middle line of the drive motor 11 in a second direction. The motor controller 14 is offset rightwards relative to the middle line of the drive motor 11 in the second direction.

The motor controller 14 is arranged downwards and obliquely in a direction from rear to front, and matches a trend of an upper end surface and a front end surface of the speed reducer 13 in the second direction. A size, a structure, an oil passage, and the like inside the speed reducer 13 are arranged by fully using space in the second direction and a Z direction, to maximize compression of a size in a first direction. The motor controller 14 is electrically connected to the drive motor 11, the transmission 12, and the differential lock 15. The drive motor 11 is in transmission connection to the transmission 12. The transmission 12 is in transmission connection to the speed reducer 13. The speed reducer 13 is in transmission connection to the differential lock 15.

In the embodiment, an arrangement structure and sizes of the motor controller 14, the speed reducer 13, the differential lock 15, and the drive motor 11 in the electric drive assembly 10 are optimized, such that Z-direction space of a passenger compartment can be effectively increased, a user can ride more comfortably, and riding experience of the user is better.

In descriptions of this application, it will be understood that the orientation or positional relationship indicated by the terms "center", "upper", "lower", "vertical", "horizontal", "top", "bottom", "inner", "outer", "axial", "radial", "circumferential", and the like, is an orientation or positional relationship shown based on the accompanying drawings, and is only for ease of describing this application and simplifying the descriptions, rather than indicating or implying that the apparatus or element indicated must have a specific orientation or be constructed and operated in a specific orientation, and therefore will not be understood as a limitation on this application.

In addition, the terms "first" and "second" are used for a descriptive purpose only and will not be understood as indicating or implying relative importance or implicitly indicating a quantity of indicated technical features. Therefore, a feature defined by "first" or "second" may explicitly or implicitly include one or more of such features. In the descriptions of this application, "a plurality of" means two or more, unless otherwise explicitly defined.

In this application, unless otherwise explicitly specified and defined, terms such as "mount", "interconnect", "connect", and "fix" will be understood in a broad sense, for example, may be understood as a fixed connection, a detachable connection, or an integrated connection, or may be understood as a direct connection or an indirect connection through an intermediate medium, or may be understood as internal communication between two elements or an interaction relationship between two elements. A person of ordinary skill in the art will understand specific meanings of the foregoing terms in this application based on specific situations.

In this application, unless otherwise clearly specified and defined, that a first feature is "above" or "below" a second feature may be that the first and second features are in direct contact, or the first and second features are in indirect contact through an intermediate medium. In addition, that the first feature is "above", "over", or "on top of" the second feature may be that the first feature is directly above or obliquely above the second feature, or merely indicates that a level height of the first feature is higher than that of the second feature. That the first feature is "under", "below", or "beneath" the second feature may be that the first feature is directly below or obliquely below the second feature, or merely indicates that a horizontal height of the first feature is less than that of the second feature.

In descriptions of this specification, reference to descriptions of the terms such as "one embodiment", "some embodiments", "example", "specific example", or "some examples" means that specific features, structures, materials, or characteristics described with reference to the embodiment or example are included in at least one embodiment or example of this application. In this specification, illustrative expressions of the foregoing terms do not necessarily refer to the same embodiment or example. Furthermore, the described specific features, structures, materials, or characteristics may be combined in any one or more embodiments or examples in a suitable manner. In addition, when there is no contradiction, a person skilled in the art may incorporate and combine different embodiments or examples described in this specification and features of different embodiments or examples.

Although embodiments of this application have been shown and described, a person of ordinary skill in the art will understand that various changes, modifications, replacements, and variations may be made to these embodiments without departing from the principles and objectives of this application, and the scope of this application is defined by the claims and equivalents thereof.

## Claims

1. An electric drive assembly, comprising:
a drive motor, wherein a central axis of a drive shaft of the drive motor extends in a first direction;
a transmission, wherein the transmission is connected to the drive motor and is located on one side of the drive motor in the first direction;
a speed reducer, wherein the speed reducer is connected to the transmission and arranged on a side of the transmission that faces the drive motor; and
a motor controller, wherein the motor controller and the speed reducer are staggered in the first direction and/or a second direction, and the first direction, the second direction, and a Z direction intersect with each other.

2. The electric drive assembly according to claim 1, wherein the motor controller is disposed on a side of the speed reducer that faces the drive motor, and the motor controller and the speed reducer are completely staggered in the first direction.

3. The electric drive assembly according to claim 2, wherein in a projection plane perpendicular to the first direction, a projection of the motor controller and a projection of the speed reducer at least partially overlap in the Z direction.

4. The electric drive assembly according to claim 3, wherein the motor controller and the drive motor are arranged in the second direction, and the second direction, the first direction, and the Z direction intersect with each other.

5. The electric drive assembly according to claim 4, wherein in a direction from the drive motor towards the motor controller, the motor controller extends downwards and obliquely in the Z direction; and/or in a projection plane perpendicular to the second direction, a projection of the motor controller and a projection of the drive motor partially overlap in the Z direction.

6. The electric drive assembly according to claim 5, wherein a thickness of the speed reducer in the first direction is less than a length of the speed reducer in the second direction.

7. The electric drive assembly according to claim 6, wherein the electric drive assembly further comprises a differential lock, the differential lock is disposed on a side of the speed reducer that faces the drive motor, the differential lock is connected to the speed reducer, and the differential lock is located in a space defined by the drive motor, the speed reducer, and the motor controller.

8. The electric drive assembly according to any one of claims 1 to 7, wherein in the Z direction, a bottom of the drive motor is higher than a bottom of the speed reducer; and/or a bottom of the transmission is higher than the bottom of the speed reducer.

9. The electric drive assembly according to any one of claims 1 to 8, further comprising a housing, wherein a mounting cavity is formed in the housing, the speed reducer, the drive motor, and the transmission are all disposed in the mounting cavity, and the motor controller is fastened to the housing.

10. A vehicle, comprising the electric drive assembly according to any one of claims 1 to 9.
